# EUROPÄISCHE PATENTSCHRIFT

(11) **EP 2 639 657 B1**
(45) Veröffentlichungstag und Bekanntmachung des Hinweises auf die Patenterteilung: **04.04.2018**
(21) Anmeldenummer: 13165039.2
(22) Anmeldetag: 24.04.2013
(51) Int. Cl.: G05B 11/42

(54) **Verzögerungsminimierte Erfassung einer Hilfsregelgröße**
Recording of an auxiliary variable in a way with minimum delay
Saisie d'une grandeur de réglage auxiliaire avec un retard minimal

(43) Veröffentlichungstag der Anmeldung: 18.09.2013
(73) Patentinhaber: MOOG GmbH, 71034 Böblingen (DE)
(72) Erfinder: Händle, Werner, 71672 Marbach a. N. (DE); Veil, Eberhard, 70569 Stuttgart (DE); Bürker, Michael, 72119 Ammerbuch (DE)
(74) Vertreter: Wittmann, Ernst-Ulrich

(56) Entgegenhaltungen:
- US-A1- 2003 097 193
- US-A1- 2007 191 967
- US-A1- 2009 251 092
- US-B1- 7 006 909

## Beschreibung

Die Erfindung betrifft ein Verfahren für die verzögerungsminimierte Erfassung einer Hilfsregelgröße für ein System enthaltend eine Regelstrecke und einen Regler, wobei am Ende der Regelstrecke eine Ausganggröße erfasst wird, wobei innerhalb der Regelstrecke eine Störgröße angreift.

Das System kann ein mechanisches System oder ein hydraulisches System sein. In dem mechanischen System kann eine Komponente enthalten sein, die eine Kraft erzeugt. Diese Kraft wird dazu benutzt, um Signale und/oder Energie zu übertragen. Zur Regelung wird die Istkraft als Regelgröße erfasst. In hydraulischen Systemen ist die Regelgröße der Istdruck. In hydraulischen Systemen werden mittels eines Fluids Signale, Kraft und/oder Energie übertragen. Dazu muss in dem System ein hydraulischer Druck und/oder Volumenstrom zur Verfügung stehen. Diese Größen werden üblicherweise durch Pumpen erzeugt. Diese Pumpen verbrauchen zur Druck- und/oder Volumenstromerzeugung Energie. Die Systemgrenze kann aber auch enger gezogen werden, so dass die Pumpe außerhalb des betrachteten Systems liegt.

Im Stand der Technik sind ungeregelte und geregelte Pumpenantriebe bekannt, wobei die letzteren einen höheren Wirkungsgrad aufweisen. Beispielsweise kann ein geregeltes Pumpensystem drehzahlvariabel ausgeführt sein und im Wesentlichen aus einer Antriebseinheit, bestehend aus Frequenzumrichter und Regelelektronik, einem Norm- oder Servo-Elektromotor sowie einer Hydraulikpumpe bestehen. Dabei verhält sich der Förderstrom der Hydraulikpumpe proportional zur Antriebsdrehzahl des Elektromotors. Im laufenden Betrieb überträgt die Maschinensteuerung einem Regler die Druck/Volumenstrom-Sollwerte. Dervorherrschende Systemdruck wird von einem Druckmessmittel erfasst und ebenfalls dem Regler übersendet. Anhand der Regelabweichung errechnet der Regler die notwendige Motordrehzahl und passt diese entsprechend den bestehenden Systemanforderungen an Fördermenge und Druck an.

Für den Einsatz als Hydraulikpumpe eignen sich beispielsweise Radialkolbenpumpen. Das benötigte Antriebsmoment wird von einer Welle über eine Kupplung auf einen Zylinderstern, der auf einem Steuerzapfen gelagert ist, übertragen. Radial im Zylinderstern angeordnete Kolben stützen sich beispielsweise über Gleitschuhe auf einem Hubring ab. Kolben und Gleitschuh sind beispielsweise über ein Kugelgelenk miteinander verbunden. Die Gleitschuhe werden im Hubring geführt und im Betrieb durch Fliehkraft und Öldruck an den Hubring gedrückt. Bei Rotation des Zylindersterns führen die Kolben infolge der exzentrischen Lage des Hubrings eine Hubbewegung aus. Die Exzentrizität wird dabei durch Verstellkolben, die über ein Pilotventil angesteuert werden, verändert. Über eine Veränderung der Exzentrizität wird die Größe des Hubes beeinflusst, wobei sich die geförderte Fluidmenge aus dem Hub und der Drehzahl ergibt.

Zur Beeinflussung des Druckregelkreisverhaltens wird die Zustandsgröße Druckänderung oder Fördermenge für den Regelkreis benötigt. Fördermenge und Druckänderung haben die gleiche Ordnung in Systemen mit hydraulischen Kapazitäten. Die Fördermenge ist bei Kolbenpumpen mit Drehzahlsteuerung direkt proportional einer Drehzahl, bei Verstellpumpen dem Schwenkwinkel oder der Hubringposition oder bei Ventilsteuerungen der Ventilschieberposition. Die Fördermenge Ist direkt verzögerungsfrei messbar. Die Druckänderung kann durch Differentiation des Drucksignals gewonnen werden. Die Verwendung der Fördermenge in der Rückführung verbessert das dynamische Verhalten des Regelkreises, führt aber in Störsituationen des Regelkreises bei einem Verbrauch von Fluid zu Regelfehlern. Als Maßnahme zur Minimierung solcher Regelfehler hat sich das Vorsehen eines zusätzlichen Integrators im Regelkreis bewährt. Alternativ kann das Signal über einen extrem niederfrequenten Hochpassfilter aufgeschaltet werden, was zu einer Entkopplung des Gleichtaktanteils führt.

Beide Maßnahmen verschlechtern die Dynamik des Störverhaltens. Wird die Druckänderung anstatt der Fördermenge als Rückführung verwendet, ist dieser Nachteil nicht gegeben. Ein Problem liegt dabei aber in der Erfassung der Druckänderung. Der Druck wird gemessen, die Druckänderung wird durch Differentiation des Druckes ermittelt. Das Drucksignal ist bei Pumpenanwendungen sehr verrauscht. Eine Differentiation ohne Tiefpassfilterung ist im Regelkreis nur bedingt tauglich. Die Tiefpassfilterung muss oft im Nutzfrequenzbereich des Regelkreises erfolgen. Durch diese Verzögerung in der Druckänderungserfassung kann die Mächtigkeit dieser Zustandsgröße in der Beeinflussung der Regeldynamik nicht voll genutzt werden.

Im Stand der Technik offenbart die US 2003 097 193 A1 einen Linearmotor mit einem PID-Regler. Dabei wird im Rückkopplungszweig eine Hilfsregelgröße berechnet. Dies geschieht mittels eines Filters, der das Eingangsdrehmoment schätzt, und mittels eines weiteren Filters, der ein inverses Modell der Motordrehmomentkonstante verwendet. Damit wird der Schätzfehler aus einem Vergleich der erfassten Ausgangsgröße und der integrierten Hilfsregelgröße berechnet.

Druckänderung. Der Druck wird gemessen, die Druckänderung wird durch Differentiation des Druckes ermittelt. Das Drucksignal ist bei Pumpenanwendungen sehr verrauscht. Eine Differentiation ohne Tiefpassfilterung ist im Regelkreis nur bedingt tauglich. Die Tiefpassfilterung muss oft im Nutzfrequenzbereich des Regelkreises erfolgen. Durch diese Verzögerung in der Druckänderungserfassung kann die Mächtigkeit dieser Zustandsgröße in der Beeinflussung der Regeldynamik nicht voll genutzt werden.

Aufgabe der Erfindung ist es, ein Verfahren für eine verzögerungsminimierte Erfassung einer Hilfsregelgröße für ein System enthaltend eine Regelstrecke und einen Regler, wobei am Ende der Regelstrecke eine Ausganggröße erfasst wird, wobei innerhalb der Regelstrecke eine Störgröße angreift, anzugeben.

Erfindungsgemäß wird diese Aufgabe durch ein Verfahren mit den Merkmalen des unabhängigen Anspruches 1 gelöst. Vorteilhafte Weiterbildungen des Verfahrens ergeben sich aus den Unteransprüchen 2-10.

Eine weitere Aufgabe besteht in der Angabe eines hydraulischen Systems, bei dem der Druck über ein verzögerungsfreies Druckänderungssignal geregelt wird. Diese Aufgabe wird durch ein hydraulisches System gemäß Anspruch 11 gelöst. Vorteilhafte Ausführungsformen des hydraulischen Systems ergeben sich aus den Unteransprüchen 12 - 19.

Gemäß dem erfindungsgemäßen Verfahren erfolgt die verzögerungsminimierte Erfassung einer Hilfsregelgröße für ein System enthaltend eine Regelstrecke und einen Regler, wobei am Ende der Regelstrecke eine Ausgangsgröße erfasst wird, wobei innerhalb der Regelstrecke eine Störgröße angreift, dadurch, dass in der Regelstrecke an einer Stelle vor dem Angriffspunkt der Störgröße eine Zustandsgröße erfasst wird, wobei die Hilfsregelgröße aus dem mit einer Konstanten kₓ bewerteten Zustandsgröße und einem Schätzfehler berechnet wird, wobei der Schätzfehler aus einem Vergleich der erfassten Ausgangsgröße und der integrierten Hilfsregelgröße berechnet wird. Die geschätzte Druckänderung setzt sich aus dem Schätzfehler und dem mit einer Konstanten kₓ bewerteten Hubringsignal zusammen. Die Rückführung des inneren Regelkreises wird jetzt durch das unverzögerte Hilfssignal bestimmt, und nicht mehr durch die verzögerungsbehaftete Differenzierung. Dieses Signal ist darüber hinaus wesentlich rauschärmer. Die erfasste Ausgangsgröße kann zur Weiterverarbeitung mittels eines Filters gemittelt werden. Die Hilfsregelgröße kann insbesondere über ein Proportionalglied auf den Regler zurückgeführt werden und der Schätzfehler vor dem Vergleich mit der mit der Konstanten kₓ bewerteten Zustandsgröße mit einem Proportionalfaktor bewertet werden.

In einer vorteilhaften Ausführungsform wird der Schätzfehler vor der Aufsummierung mit der mit der Konstanten kₓ bewerteten Zustandsgröße mit einem Proportionalfaktor bewertet.

In einer Ausführungsform ist dass das System ein hydraulisches System mit einem Hydraulikfluid ist und die erfasste Ausgangsgröße eine mechanische Größe, wobei die mechanische Größe eine Kraft ist, die durch einen mit einem Druck (p) mit einem Hydraulikfluid beaufschlagbaren Hydraulikzylinder erzeugt wird. Dabei kann die Istkraft als Regelgröße mittels Sensoren am Ende der Regelstrecke erfasst werden.

In einer weiteren Ausführungsform ist das System ein hydraulisches System mit einem Hydraulikfluid und die erfasste Ausgangsgröße der Druck des Hydraulikfluids. Dabei kann der Istdruck als Regelgröße mittels Sensoren am Ende der Regelstrecke erfasst werden.

In einer vorteilhaften Weiterbildung enthält das hydraulisches System eine Komponente, über die ein Volumenstrom des Hydraulikfluids erzeugbar ist, der in dem hydraulischen System zu einer Druckänderung führt.

Dabei kann die Komponente, über die ein Volumenstrom erzeugbar ist, ein Ventil sein, wobei das hydraulische System über das Ventil mit einem Konstantdrucknetz verbindbar ist und durch das Ventil der Volumenstrom zwischen dem Konstantdrucknetz und dem hydraulischen System gesteuert wird.

Alternativ kann die Komponente, über die ein Volumenstrom erzeugbar ist, eine von einem Motor angetriebene Konstantpumpe sein, bei der die Verstellung des Volumenstroms durch eine Änderung der Motordrehzahl erfolgt.

Alternativ kann die Komponente, über die ein Volumenstrom erzeugbar ist, eine von einem Motor angetriebene Verstellpumpe sein, bei der die Verstellung des Volumenstroms durch eine Änderung des Fördervolumens je Umdrehung und/oder durch eine Änderung der Motordrehzahl erfolgt. Dabei kann die Verstellpumpe eine Radialkolbenpumpe mit einem Hubring sein, bei der sich ein Fördervolumen der Pumpe aus der Hubringstellung und der Motordrehzahl ergibt. Dabei kann das hydraulische System einen inneren Regelkreis für die Druckänderung und einen äußeren Regelkreis für den Druck aufweisen. Die Verstellpumpe kann beispielsweise eine Radialkolbenpumpe oder eine Axialkolbenpumpe sein, wobei sich bei einer Radialkolbenpumpe der Volumenstrom der Pumpe aus der Hubringstellung und der Motordrehzahl ergibt. Bei einer Axialkolbenpumpe ergibt der Pumpenvolumenstrom aus dem Schwenkwinkel und der Motordrehzahl.

In einer vorteilhaften Weiterbildung ist die Konstante kₓ umgekehrt proportional zur Kapazität c des hydraulischen Systems und proportional zur Motordrehzahl n und zur Pumpenfördermenge.

In einer vorteilhaften Ausführungsform ist die Hilfsregelgröße die geschätzte Druckänderung.

In dem erfinderischen System mit einer Regelstrecke, einer Sensorik zur Erfassung einer Ausgangsgröße am Ende der Regelstrecke und einem Regler zur Regelung der Ausgangsgröße, wobei die Regelstrecke an einem Angriffspunkt durch eine Störgröße angreifbar ist, ist in der Regelstrecke an einer Stelle vor dem Angriffspunkt der Störgröße eine Zustandsgröße erfassbar, wobei eine Hilfsregelgröße aus dem mit einer Konstanten kₓ bewerteten Zustandsgröße und einem Schätzfehler berechenbar ist, wobei der Schätzfehler aus einer Differenz der erfassten Ausgangsgröße und der integrierten Hilfsregelgröße berechnet wird.

In einer vorteilhaften Ausführungsform ist die erfasste Ausgangsgröße zur Erfassung mittels eines Filters mittelbar.

In einer Ausführungsform ist das System ein hydraulisches System mit einem Hydraulikfluid. Die erfasste Ausgangsgröße ist dabei eine mechanische Größe, wobei die mechanische Größe eine Kraft ist, die durch einen mit einem Druck (p) mit einem Hydraulikfluid beaufschlagbaren Hydraulikzylinder erzeugt wird.

Alternativ kann das System auch ein hydraulisches System mit einem Hydraulikfluid sein, wobei die erfassbare Ausgangsgröße der Druck des Hydraulikfluids ist.

Dabei kann das hydraulisches System eine Komponente enthalten, über die ein Volumenstrom des Hydraulikfluids erzeugbar ist, der in dem hydraulischen System zu einer Druckänderung führt.

In einer vorteilhaften Ausführungsform ist die Komponente, über die ein Volumenstrom erzeugbar ist, ein Ventil, wobei das hydraulische System über das Ventil mit einem Konstantdrucknetz verbindbar ist und durch das Ventil der Volumenstrom zwischen dem Konstantdrucknetz und dem hydraulischen System steuerbar ist.

In einer alternativen Ausführungsform ist die Komponente, über die ein Volumenstrom (Q) erzeugbar ist, eine von einem Motor angetriebene Konstantpumpe, bei der die Verstellung des Volumenstroms durch eine Änderung der Motordrehzahl erfolgt.

In einer weiteren alternativen Ausführungsform ist die Komponente, über die ein Volumenstrom erzeugbar ist, eine von einem Motor angetriebene Verstellpumpe, bei der die Verstellung des Volumenstroms durch eine Änderung des Fördervolumens je Umdrehung und/oder durch eine Änderung der Motordrehzahl erfolgt.

In einer vorteilhaften Ausführungsform ist an der Volumenstrom erzeugenden Komponente eine elektronische Schaltung angeordnet, mit der das erfindungsgemäße Verfahren ausführbar ist. Dabei kann sich die elektronische Schaltung an der den Volumenstrom erzeugenden Komponente befinden. Bei Verwendung einer Verstellpumpe können dabei die Regelelektronik und die Pumpe eine Einheit bilden. Bei drehzahlgeregelten Pumpen kann der Algorithmus im Umrichter untergebracht werden. Wird ein Konstantdrucknetz verwendet, wobei der Volumenstrom aus dem Konstantdrucknetz über ein Ventil gesteuert wird, können die Regelelktronik und das Ventil eine Einheit bilden. Durch diese sogenannte On-Board-Elektronik kann der Regler besonders kompakt ausgeführt werden und die Regelverzögerung wird weiter minimiert. Darüber hinaus ist keine Verkabelung zwischen Elektronik und den anderen Komponenten, wie Regler, Sensorik, Pumpe und/oder Ventil, notwendig.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
**Fig. 1** einen Signalflussplan für einen konventionellen Regelkreis mit einem zu einer Volumenstromänderung proportionalen Reglerausgang, wie er im Stand der Technik bekannt ist.
**Fig. 2** einen Signalflussplan für einen konventionellen Regelkreis mit einem zu einem Volumenstrom proportionalen Reglerausgang, wie er im Stand der Technik bekannt ist
**Fig. 3** einen Signalflussplan gemäß dem erfindungsgemäßen Verfahren für die gleiche Situation wie in Fig.1
**Fig. 4** einen Signalflussplan gemäß dem erfindungsgemäßen Verfahren für die gleiche Situation wie in Fig.2

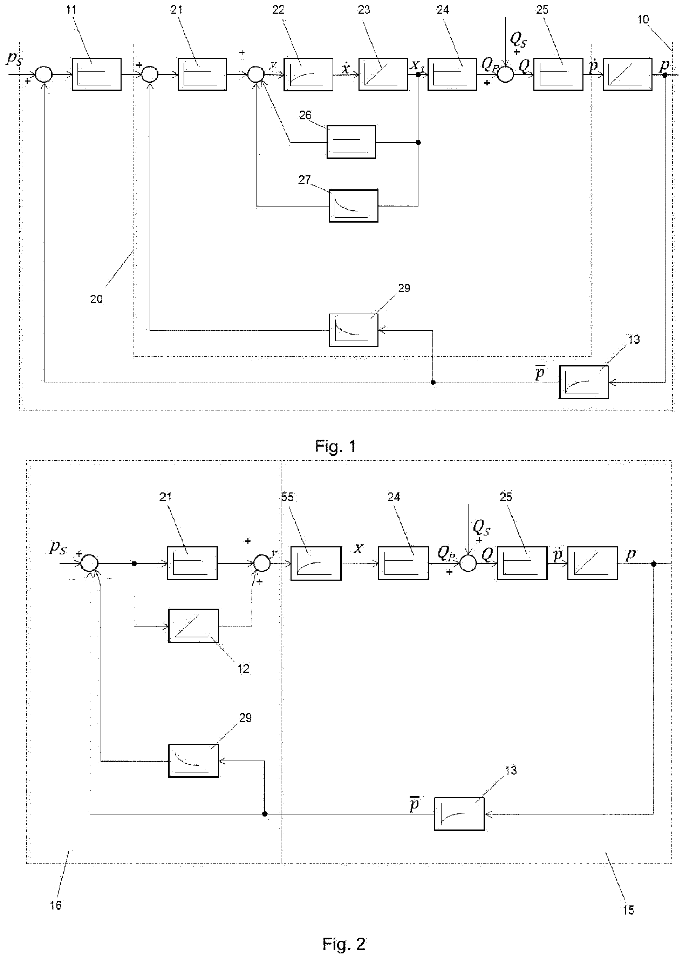

**Fig. 1** zeigt ein Beispiel eines Signalflussplans für einen konventionellen Regelkreis, wie er im Stand der Technik bekannt ist. Der Regelerausgang y ist proportional einer Volumenstromänderung, wie es beispielsweise bei der Regelung eines Regelkreises mit Verstellpumpe der Fall ist. Der Regelkreis besteht aus einem äußeren Regelkreis 10 für den Druck *p* und einem inneren Regelkreis 20 für die Druckänderung *ṗ*. Es handelt sich dabei um einen idealisierten Regelkreis. In einer realen Regelstrecke wird der Druckaufbau nicht in einer einzelnen Kapazität erfolgen, sondern in einem beliebigen Leitungsnetzwerk aus Kapazitäten, Induktivitäten und hydraulischen Widerständen.

Das Solldrucksignal *pₛ* wird über ein Proportionalglied 11 und ein Proportionalglied 21 als Stellgröße *y* auf ein Pilotventil 22 gegeben. Über das Pilotventil 22 werden Verstellkolben angesteuert, die den Hubring verstellen. Aus der Änderung der Hubringstellung *ẋ* wird über einen Integrator 23 ein Signal für die Stellung des Hubrings *x₁* abgeleitet. Über ein Proportionalglied 24 mit der Drehzahl der Pumpe und dem Fördervolumen der Pumpe bewertet ergibt sich der Volumenstrom der Pumpe *Q_{P}.* Beispielsweise durch eine Leckage als Stör-Volumenstrom *Q_{S}* ergibt sich ein tatsächlicher Volumenstrom *Q*. Mit der Kapazität des Systems, dargestellt als Proportionalglied 25, ergibt sich eine Druckänderung *ṗ*, aus der sich mittels Integration der Druck *p* ableitet. Dieser Druck *p* kann mit einem Sensor, beispielsweise einem Druckaufnehmer, direkt gemessen werden und über einen Filter 13 als gemittelter Druck *p̅* auf den Solldruck *pₛ* zurückgeführt werden. Zur Verbesserung der Regelgenauigkeit kann der gemittelte Druck *p̅* zusätzlich über einen Differenzierer 29 ebenfalls zurückgeführt werden. Um ein ruhiges Stellsignal *y* am Pilotventil 22 zu erhalten und somit verschleißträchtige unnötige Stellbewegungen zu minimieren, müssen die Signale gefiltert werden. Insbesondere das Druckändersignal *ṗ* muss nahe des Nutzfrequenzbereichs des Regelkreises gefiltert werden, wodurch die Dynamik des Regelkreises abnimmt. Als Ausweg aus dieser Situation dienen die Rückführungen des Hubringsignals *x₁* über ein Proportionalglied 26 und ein Differenzierglied 27. Die Rückführung des Hubringsignals *x₁* über ein Proportionalglied hat aber den Nachteil, dass bei Vorliegen einer Störgröße eine Regelabweichung erhalten bleibt. Rückführungen vor der Summationsstelle der Störgröße führen aber zu Regelabweichungen. Die Rückführung über ein Differenzierglied als Hochpass verschlechtert das dynamische Störverhalten, da die Zeitkonstante des Hochpasses groß gewählt werden muss..

**Fig. 2** zeigt einen Signalflussplan für einen konventionellen Regelkreis mit einem zu einem Volumenstrom proportionalen Reglerausgang y, wie er im Stand der Technik bekannt ist.

Der Regelerausgang y steuert proportional einen Volumenstrom, wie es beispielsweise bei der Regelung eines Regelkreises mit drehzahlvariablen Pumpenantrieben oder Ventilsteuerungen der Fall ist. Der Regelkreis besteht aus einem Regelkreis 15 für den Druck *p* und dem Regler 16. Es handelt sich dabei ebenfalls um einen idealisierten Regelkreis. In einer realen Regelstrecke wird der Druckaufbau nicht in einer einzelnen Kapazität erfolgen, sondern in einem beliebigen Leitungsnetzwerk aus Kapazitäten, Induktivitäten und hydraulischen Widerständen.

Das Solldrucksignal *pₛ* wir über ein Integralglied 12 und ein Proportionalglied 21 als Stellgröße *y* auf ein Stellsystem (55, 24) gegeben, womit sich der Volumenstrom der Pumpe *Q_{P}* ergibt. Beispielsweise durch eine Leckage als Stör-Volumenstrom *Q_{S}* ergibt sich ein tatsächlicher Volumenstrom *Q*. Mit der Kapazität des Systems, dargestellt als Proportionalglied 25, ergibt sich eine Druckänderung *ṗ*, aus der sich mittels Integration der Druck *p* ableitet. Dieser Druck *p* kann mit einem Sensor, beispielsweise einem Druckaufnehmer, direkt gemessen werden und über einen Filter 13 als gemittelter Druck *p̅* auf den Solldruck *pₛ* zurückgeführt werden. Zur Verbesserung der Regelgenauigkeit und der Dynamik kann der gemittelte Druck *p̅* zusätzlich über einen Differenzierer 29 ebenfalls zurückgeführt werden.

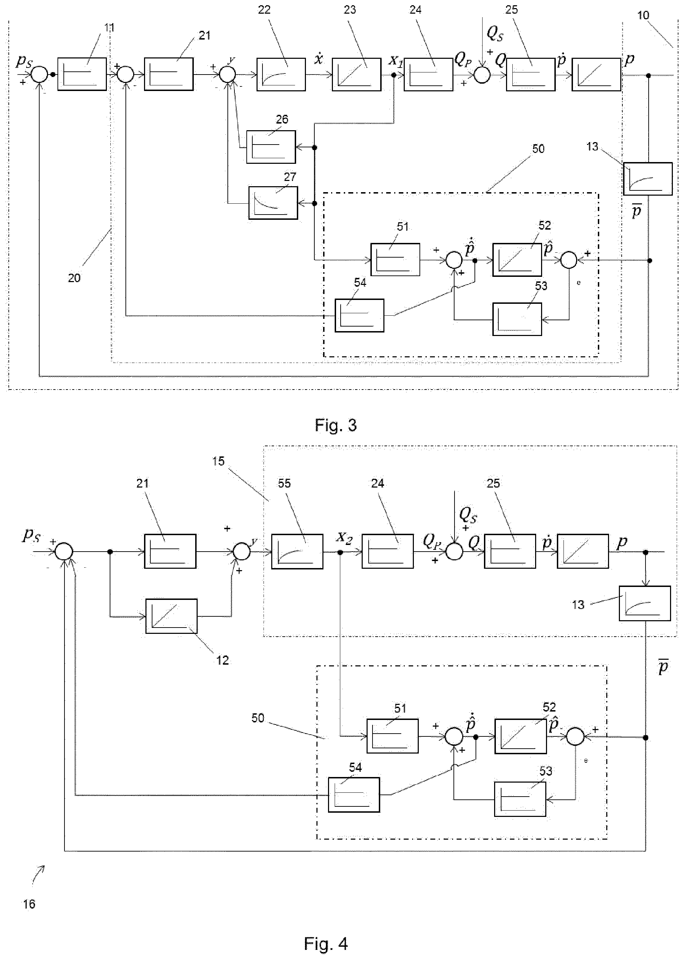

**Fig. 3** zeigt einen Signalflussplan gemäß dem erfindungsgemäßen Verfahren für die gleiche Situation wie in Fig.1. Das Solldrucksignal *pₛ* wird über ein Proportionalglied 11 und ein Proportionalglied 21 als Stellgröße *y* dem Pilotventil 22 zugeführt. Über das Pilotventil 22 werden Verstellkolben angesteuert, die den Hubring verstellen. Aus der Änderung der Hubringstellung *ẋ* wird über einen Integrator 23 ein Signal für die Stellung des Hubrings *x₁* abgeleitet. Wie in der in Fig. 1 dargestellten Situation wird das Hubringssignal *x₁* über ein Proportionalglied 26 und ein Differenzierglied 27 als Hochpass zurückgeführt. In der Regelstrecke wird aus der Änderung der Hubringstellung *ẋ* über einen Integrator 23 ein Signal für die Stellung des Hubrings *x₁* abgeleitet. Der Volumenstrom der Pumpe *Q_{P}* ergibt sich aus der über ein Proportionalglied 24 mit der Drehzahl der Pumpe bewerteten Stellung des Hubrings *x₁.* Beispielsweise durch eine Leckage kann ein Stör-Volumenstrom *Q_{S}* auftreten. Unter Berücksichtigung dieses Stör-Volumenstroms *Q_{S}* ergibt sich aus dem Volumenstrom der Pumpe *Q_{P}* ein tatsächlicher Volumenstrom *Q*. Mit der Kapazität des Systems, dargestellt als Proportionalglied 25, ergibt sich eine Druckänderung *ṗ*, aus der sich mittels Integration der Druck *p* ableitet. Dieser Druck *p* kann mit einem Sensor, beispielsweise einem Druckaufnehmer, direkt gemessen werden. Über einen Filter 13 wird das Drucksignal *p* als gemittelter Druck *p̅* dem Beobachter 50 zur Verfügung gestellt. Als Eingangsgröße dient dem Beobachter 50 das Hubringsignal *x₁,* das verzögerungsfrei abgegriffen wird. Das Hubringsignal *x₁* wird in einem Proportionalglied 51 mit einer Konstanten *kₓ* bewertet. Die Konstante *kₓ* ist umgekehrt proportional zur Kapazität c des hydraulischen Systems und proportional zur Motordrehzahl n und zur Pumpenfördermenge. Zu dem mit der Konstanten *kₓ* bewerteten Hubringsignal *x₁* wird der mit einem Proportionalfaktor in dem Proportionalglied 53 bewertete Schätzfehler *e* aufaddiert, um die geschätzte Druckänderung 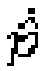 zu erhalten. Über das Integrationsglied 52 wird aus der geschätzten Druckänderung 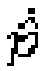 der geschätzte Druck *p̂.* Aus der Differenz des gemessenen Drucks *p* und des geschätzten Drucks *p̂* folgt der Schätzfehler e.

Die geschätzte Druckänderung 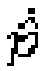 wird nun über ein Proportionalglied 54 dem Signal des Solldrucks für den Vergleich zugeführt. Somit wird die Rückführung des inneren Regelkreises jetzt durch das unverzögerte Hubringsignal *x₁* bestimmt und nicht mehr durch die verzögerungsbehaftete Differenzierung. Dieses Signal ist darüber hinaus wesentlich rauschärmer. Der Regler arbeitet nun wesentlich robuster, wobei das Störverhalten nicht wesentlich beeinflusst wird.

**Fig. 4** zeigt einen Signalflussplan gemäß dem erfindungsgemäßen Verfahren für die gleiche Situation wie in Fig.2. Das Solldrucksignal *pₛ* wir über Integralglied 12 und ein Proportionalglied 21 als Stellgröße *y* auf ein Stellsystem 55;24 gegeben, womit sich der Volumenstrom der Pumpe *Q_{P}* ergibt. Beispielsweise durch eine Leckage als Stör-Volumenstrom *Q_{S}* ergibt sich ein tatsächlicher Volumenstrom *Q*. Mit der Kapazität des Systems, dargestellt als Proportionalglied 25, ergibt sich eine Druckänderung *ṗ*, aus der sich mittels Integration der Druck *p* ableitet. Dieser Druck *p* kann mit einem Sensor, beispielsweise einem Druckaufnehmer, direkt gemessen werden und über einen Filter 13 als gemittelter Druck *p̅* auf den Solldruck *pₛ* zurückgeführt werden.

Über den Filter 13 wird das Drucksignal *p* als gemittelter Druck *p̅* auch dem Beobachter 50 zur Verfügung gestellt. Als Eingangsgröße dient dem Beobachter 50 das Signal *x₂* der Stellung der Pumpe bei Verwendung einer Verstellpumpe, der Motordrehzahl bei Verwendung einer Konstantpumpe oder des Ventils bei ventilgesteuertem Volumenstrom aus einem Konstantdrucknetz, das verzögerungsfrei abgegriffen wird. Das Signal *x₂* wird in einem Proportionalglied 51 mit einer Konstanten *kₓ* bewertet. Die Konstante *kₓ* steht in Abhängigkeit von den Übertragungsgliedern 24, 25. Ändern sich die Übertragungsglieder 24, 25 in der Regelstrecke, ist es vorteilhaft das Proportionalglied 51 anzupassen. Zu dem mit der Konstanten *kₓ* bewerteten Hubringsignal *x₂* wird der mit einem Proportionalfaktor in dem Proportionalglied 53 bewertete Schätzfehler e aufaddiert, um die geschätzte Druckänderung 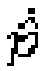 zu erhalten. Über das Integrationsglied 52 wird aus der geschätzten Druckänderung 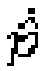 der geschätzte Druck *p̂.* Aus der Differenz des gemessenen Drucks *p* und des geschätzten Drucks *p̂* folgt der Schätzfehler e.

Die geschätzte Druckänderung 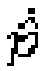 wird nun über ein Proportionalglied 54 dem Signal des Solldrucks für den Vergleich zugeführt. Somit wird die Rückführung des inneren Regelkreises jetzt durch das unverzögerte Signal *x₂* bestimmt und nicht mehr durch die verzögerungsbehaftete Differenzierung. Dieses Signal ist darüber hinaus wesentlich rauschärmer. Der Regler arbeitet nun wesentlich robuster, wobei das Störverhalten nicht wesentlich beeinflusst wird.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Bezugszeichenliste:

10 äußerer Regelkreis
11 Proportionalglied
12 Integralglied
13 Sensorfilter
15 Regelstrecke
16 Regler
20 innerer Regelkreis
21 Proportionalglied
22 Pilotventil
23 Integrator Hubringsignal
24 Proportionalglied Drehzahl Hubring
25 Proportionalglied Kapazität
26 Proportionalglied Rückführung
27 Differenzierer Rückführung
29 Differenzierer Rückführung gemittelter Druck
50 Beobachter
51 Proportionalglied *kₓ*
52 Integrationsglied Schätzdrucksignal
53 Proportionalglied
54 Proportionalglied Stabilisierung
55 Stellsystem
*c* Kapazität
*e* Schätzfehler
*n* Motordrehzahl
*p* Druck
*pₛ* Solldruck
*ṗ* Drückänderung
*p̅* Druckmittelwert
*p̂* geschätzter Druck
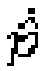 Änderung des geschätzten Drucks
*Q* Volumenstrom
*Q_{P}* Volumenstrom der Pumpe
*Q_{S}* Stör-Volumenstrom
*X₁* Hubringstellung, Hubringssignal
*ẋ* Änderung der Hubringstellung
*X₂* Signal Stellung Pumpe, Drehzahl oder Ventil
*y* Stellgröße

## Patentansprüche

1. Verfahren für die verzögerungsminimierte Erfassung einer Hilfsregelgröße für ein System enthaltend eine Regelstrecke (15) und einen Regler (16), wobei am Ende der Regelstrecke eine Ausgangsgröße erfasst wird, wobei innerhalb der Regelstrecke (15) eine Störgröße (Q_{S}) angreift, wobei in der Regelstrecke (15) an einer Stelle vor dem Angriffspunkt der Störgröße (Q_{S}) eine Zustandsgröße erfasst wird, wobei die Hilfsregelgröße aus dem mit einer Konstanten kₓ bewerteten Zustandsgröße und einem Schätzfehler (e) berechnet wird, wobei der Schätzfehler (e) aus einem Vergleich der erfassten Ausgangsgröße und der integrierten Hilfsregelgröße berechnet wird und **dadurch gekennzeichnet, dass** das System ein hydraulisches System mit einem Hydraulikfluid ist, und dass die Konstante kₓ umgekehrt proportional zur Kapazität (c) des hydraulischen Systems ist und proportional zur Motordrehzahl (n) und zur Pumpenfördermenge ist.

2. Verfahren nach Anspruch 1,
**dadurch gekennzeichnet,**
**dass** der Schätzfehler (e) vor der Summation mit der mit der Konstanten kₓ bewerteten Zustandsgröße mit einem Proportionalfaktor bewertet wird.

3. Verfahren nach einem der Ansprüche 1 oder 2,
**dadurch gekennzeichnet,**
**dass** die erfasste Ausgangsgröße eine mechanische Größe ist, wobei die mechanische Größe eine Kraft ist, die durch einen mit einem Druck (p) mit einem Hydraulikfluid beaufschlagbaren Hydraulikzylinder erzeugt wird.

4. Verfahren nach einem der Ansprüche 1 oder 2,
**dadurch gekennzeichnet,**
**dass** die erfasste Ausgangsgröße der Druck (p) des Hydraulikfluids ist.

5. Verfahren nach einem der Ansprüche 3 oder 4,
**dadurch gekennzeichnet,**
**dass** das hydraulisches System eine Komponente enthält, über die ein Volumenstrom (Q) des Hydraulikfluids erzeugbar ist, der in dem hydraulischen System zu einer Druckänderung (p) führt.

6. Verfahren nach Anspruch 5,
**dadurch gekennzeichnet,**
**dass** die Komponente, über die ein Volumenstrom (Q) erzeugbar ist, ein Ventil ist, wobei das hydraulische System über das Ventil mit einem Konstantdrucknetz verbindbar ist und durch das Ventil derVolumenstrom (Q) zwischen dem Konstantdrucknetz und dem hydraulischen System gesteuert wird.

7. Verfahren nach Anspruch 5,
**dadurch gekennzeichnet,**
**dass** die Komponente, über die ein Volumenstrom (Q) erzeugbar ist, eine von einem Motor angetriebene Konstantpumpe ist, bei der die Verstellung des Volumenstroms (Q_{P}) durch eine Änderung der Motordrehzahl (n) erfolgt.

8. Verfahren nach Anspruch 5,
**dadurch gekennzeichnet,**
**dass** die Komponente, über die ein Volumenstrom (Q) erzeugbar ist, eine von einem Motor angetriebene Verstellpumpe ist, bei der die Verstellung des Volumenstroms (Q_{P}) durch eine Änderung des Fördervolumensje Umdrehung und/oder durch eine Änderung der Motordrehzahl (n) erfolgt.

9. Verfahren nach einem der Ansprüche 1 bis 8,
**dadurch gekennzeichnet,**
**dass** die Hilfsregelgröße die geschätzte Druckänderung (p̂) ist.

10. System, enthaltend eine Regelstrecke (15), eine Sensorik zur Erfassung einer Ausgangsgröße am Ende der Regelstrecke (15) und einen Regler zur Regelung der Ausgangsgröße, wobei die Regelstrecke (15) an einem Angriffspunkt durch eine Störgröße angreifbar ist, wobei das System eingerichtet ist in der Regelstrecke (15) an einer Stelle vor dem Angriffspunkt der Störgröße (Qₛ) eine Zustandsgröße zu erfassen, wobei eine Hilfsregelgröße aus dem mit einer Konstanten kₓ bewerteten Zustandsgröße und einem Schätzfehler (e) berechenbar ist, wobei der Schätzfehler (e) aus einem Vergleich der erfassten Ausgangsgröße und der integrierten Hilfsregelgröße berechnet wird und **dadurch gekennzeichnet, dass** das System ein hydraulisches System mit einem Hydraulikfluid ist, und dass die Konstante kₓ umgekehrt proportional zur Kapazität (c) des hydraulischen Systems ist und proportional zur Motordrehzahl (n) und zur Pumpenfördermenge ist.

11. System nach Anspruch 10,
**dadurch gekennzeichnet,**
**dass** die erfasste Ausgangsgröße zur Erfassung mittels eines Filters mittelbar ist.

12. System nach einem der Ansprüche 10 oder 11,
**dadurch gekennzeichnet,**
**dass** die erfasste Ausgangsgröße eine mechanische Größe ist, wobei die mechanische Größe eine Kraft ist, die durch einen mit einem Druck (p) mit einem Hydraulikfluid beaufschlagbaren Hydraulikzylinder erzeugt wird.

13. System nach einem der Ansprüche 10 oder 11,
**dadurch gekennzeichnet,**
**dass** die erfassbare Ausgangsgröße der Druck (p) des Hydraulikfluids ist.

14. System nach einem der Ansprüche 12 oder 13,
**dadurch gekennzeichnet,**
**dass** das hydraulisches System eine Komponente enthält, über die ein Volumenstrom (Q) des Hydraulikfluids erzeugbar ist, der in dem hydraulischen System zu einer Druckänderung (ṗ) führt.

15. System nach Anspruch 14,
**dadurch gekennzeichnet,**
**dass** die Komponente, über die ein Volumenstrom (Q) erzeugbar ist, ein Ventil ist, wobei das hydraulische System über das Ventil mit einem Konstantdrucknetz verbindbar ist und durch das Ventil der Volumenstrom (Q) zwischen dem Konstantdrucknetz und dem hydraulischen System steuerbar ist.

16. System nach Anspruch 14,
**dadurch gekennzeichnet,**
**dass** die Komponente, über die ein Volumenstrom (Q) erzeugbar ist, eine von einem Motor angetriebene Konstantpumpe ist, bei der die Verstellung des Volumenstroms (Q_{P}) durch eine Änderung der Motordrehzahl (n) erfolgt.

17. System nach Anspruch 14,
**dadurch gekennzeichnet,**
**dass** die Komponente, über die ein Volumenstrom (Q) erzeugbar ist, eine von einem Motor angetriebene Verstellpumpe ist, bei der die Verstellung des Volumenstroms (Q_{P}) durch eine Änderung des Fördervolumens je Umdrehung und/oder durch eine Änderung der Motordrehzahl (n) erfolgt.

18. System nach einem der Ansprüche 14 bis 17,
**dadurch gekennzeichnet,**
**dass** an derVolumenstrom (Q) erzeugenden Komponente eine elektronische Schaltung angeordnet ist, mit der ein Verfahren nach einem der Ansprüche 1 bis 13 ausführbar ist.

## Claims

1. A method for the delay-minimized detection of an auxiliary control variable for a system comprising a controlled system (15) and a controller (16), wherein at the end of the controlled system an output variable is detected, wherein within the controlled system (15) a disturbance variable (Qₛ) takes hold, wherein in the controlled system (15) at a point before the point of application of the disturbance variable (Qₛ) a state variable is detected, wherein the auxiliary control variable is calculated from the state variable evaluated with a constant kₓ and an estimation error (e), wherein the estimation error (e) is calculated from a comparison of the detected output variable and the integrated auxiliary control variable, and **characterized in that** the system is a hydraulic system with a hydraulic fluid, and **that** the constant kₓ is inversely proportional to the capacitance (c) of the hydraulic system and is proportional to the engine speed (n) and to the pump delivery rate.

2. The method according to claim 1,
**characterized in that**
the estimation error (e) is evaluated with a proportionality factor before the summation with the state variable evaluated using the constant kₓ.

3. The method according to any of claims 1 or 2,
**characterized in that**
the detected output variable is a mechanical variable, wherein the mechanical variable is a force which is generated by a hydraulic cylinder to which is applied a pressure (p) using a hydraulic fluid.

4. The method according to any of claims 1 or 2,
**characterized in that,**
the detected output variable is the pressure (p) of the hydraulic fluid.

5. The method according to any of claims 3 or 4,
**characterized in that**
the hydraulic system contains a component via which a volume flow (Q) of the hydraulic fluid can be generated, which volume flow leads to a pressure change (ṗ) in the hydraulic system.

6. The method according to claim 5,
**characterized in that,**
the component via which a volume flow (Q) can be generated is a valve, wherein the hydraulic system is connectable via the valve to a constant pressure network and the valve controls the volume flow (Q) between the constant pressure network and the hydraulic system.

7. The method according to claim 5,
**characterized in that**
the component via which a volume flow (Q) can be generated is a fixed displacement pump driven by a motor, in which pump the adjustment of the volume flow (Q_{P}) is effected by a change in the engine speed (n).

8. The method according to claim 5,
**characterized in that**
the component via which a volume flow (Q) can be generated is a variable displacement pump driven by a motor, in which pump the adjustment of the volume flow (Q_{P}) is effected by a change of the delivery volume per revolution and/or by a change in the engine speed (n).

9. The method according to any of claims 1 to 8,
**characterized in that**
the auxiliary control variable is the estimated pressure change (p̂).

10. A system comprising a controlled system (15), a sensor system for detecting an output variable at the end of the controlled system (15) and a controller for controlling the output variable, wherein the controlled system (15) can be taken hold of at a point of application by a disturbance variable, wherein the system is set up to detect a state variable in the controlled system (15) at a location before the point of application of the disturbance variable (Qₛ), wherein an auxiliary control variable can be calculated from the state variable evaluated with a constant kₓ and an estimation error (e), wherein the estimation error (e) is calculated from a comparison of the detected output variable and the integrated auxiliary control variable, and
**characterized in that** the system is a hydraulic system with a hydraulic fluid, and **that** the constant kₓ is inversely proportional to the capacitance (c) of the hydraulic system and is proportional to the engine speed (n) and to the pump delivery rate.

11. The system according to claim 10,
**characterized in that**
the detected output variable can be detected indirectly by means of a filter.

12. The system according to any of claims 10 or 11,
**characterized in that,**
the detected output variable is a mechanical variable, wherein the mechanical variable is a force which is generated by a hydraulic cylinder to which is applied a pressure (p) using a hydraulic fluid.

13. The system according to any of claims 10 or 11,
**characterized in that,**
the detectable output variable is the pressure (p) of the hydraulic fluid.

14. The system according to any of claims 12 or 13,
**characterized in that**
the hydraulic system contains a component via which a volume flow (Q) of the hydraulic fluid can be generated, which volume flow leads to a pressure change (ṗ) in the hydraulic system.

15. The system according to claim 14,
**characterized in that**
the component via which a volume flow (Q) can be generated is a valve, wherein the hydraulic system can be connected via the valve to a constant pressure network and the volume flow (Q) between the constant pressure network and the hydraulic system is controllable by the valve.

16. The system according to claim 14,
**characterized in that**
the component via which a volume flow (Q) can be generated is a fixed displacement pump driven by a motor, in which pump the adjustment of the volume flow (Q_{P}) is effected by a change in the engine speed (n).

17. The system according to claim 14,
**characterized in that**
the component via which a volume flow (Q) can be generated is a variable displacement pump driven by a motor, in which pump the adjustment of the volume flow (Q_{P}) is effected by a change of the delivery volume per revolution and/or by a change in the engine speed (n).

18. The system according to any of claims 14 to 17,
**characterized in that**
an electronic circuit, with which a method according to any of claims 1 to 13 can be carried out, is arranged on the component generating the volume flow (Q).

## Revendications

1. Procédé de détection avec minimisation de retard d'une variable de régulation auxiliaire pour un système comprenant un système commandé (15) et un régulateur (16), dans lequel une grandeur de sortie est détectée à l'extrémité du système commandé, dans lequel une variable interférente (Qₛ) est détectée dans le système commandé (15), dans lequel une variable d'état est détectée dans le système commandé (15) à un endroit avant le point d'attaque de la variable interférente (Qₛ), la variable de régulation auxiliaire étant calculée à partir de la variable d'état pondérée avec une constante kₓ et une erreur d'estimation (e), l'erreur d'estimation (e) étant calculée à partir d'une comparaison entre la grandeur de sortie mesurée et la variable de régulation auxiliaire intégrée, et **caractérisé en ce que** le système est un système hydraulique avec un fluide hydraulique et **que** la constante kₓ est inversement proportionnelle à la capacité (c) du système hydraulique et proportionnelle à la vitesse du moteur (n) et au débit de la pompe.

2. Procédé selon la revendication 1,
**caractérisé en ce que,**
l'erreur d'estimation (e) est évaluée avec un facteur proportionnel avant la somme avec la variable d'état pondérée et la constante kₓ.

3. Procédé selon l'une des revendications 1 ou 2,
**caractérisé en ce que,**
la grandeur de sortie mesurée est une variable mécanique, dans laquelle la variable mécanique est une force mécanique générée par un cylindre hydraulique qui peut subir une pression (p) avec un fluide hydraulique.

4. Procédé selon l'une des revendications 1 ou 2,
**caractérisé en ce que,**
la grandeur de sortie mesurée est la pression (p) du fluide hydraulique.

5. Procédé selon l'une des revendications 3 ou 4,
**caractérisé en ce que,**
le système hydraulique comprend un composant capable de générer un débit volumique (Q) du fluide hydraulique qui provoque un changement de pression (ṗ) dans le système hydraulique.

6. Procédé selon la revendication 5,
**caractérisé en ce que,**
le composant, par l'intermédiaire duquel un débit volumétrique (Q) peut être généré, est une vanne, dans laquelle le système hydraulique peut être relié par l'intermédiaire de la vanne à un réseau à pression constante et le débit volumétrique (Q) entre le réseau à pression constante et le système hydraulique est commandé par la vanne.

7. Procédé selon la revendication 5,
**caractérisé en ce que,**
le composant, par l'intermédiaire duquel un débit volumétrique (Q) peut être généré, est une pompe constante entraînée par un moteur, dans laquelle le débit volumétrique (Q_{P}) est réglé en modifiant la vitesse du moteur (n).

8. Procédé selon la revendication 5,
**caractérisé en ce que,**
le composant, par l'intermédiaire duquel un débit volumétrique (Q) peut être généré, est une pompe à cylindrée variable entraînée par un moteur, dans laquelle le débit volumétrique (Q_{P}) est réglé en modifiant le volume de débit par tour et/ou en changeant la vitesse du moteur (n).

9. Procédé selon l'une des revendications 1 à 8,
**caractérisé en ce que,**
la variable de régulation auxiliaire est la variation de pression estimée (p̂).

10. Système comprenant un système commandé (15), un capteur pour détecter une grandeur de sortie à l'extrémité du système commandé (15) et un régulateur pour régler la grandeur de sortie, dans lequel le système commandé (15) peut être compromis à un point d'attaque par une variable interférente, dans lequel le système est configuré dans le système commandé (15) pour détecter une variable d'état à un point avant le point d'attaque de la variable interférente (Qₛ), la variable de régulation auxiliaire étant calculée à partir de la variable d'état pondérée avec une constante kₓ et une erreur d'estimation (e), l'erreur d'estimation (e) étant calculée à partir d'une comparaison entre la grandeur de sortie mesurée et la variable de régulation auxiliaire intégrée, et **caractérisé en ce que** le système est un système hydraulique avec un fluide hydraulique et **que** la constante kₓ est inversement proportionnelle à la capacité (c) du système hydraulique et proportionnelle à la vitesse du moteur (n) et au débit de la pompe.

11. Système selon la revendication 10,
**caractérisé en ce que,**
la grandeur de sortie mesurée sert indirectement pour la détection au moyen d'un filtre.

12. Système selon l'une des revendications 10 ou 11,
**caractérisé en ce que,**
la grandeur de sortie mesurée est une variable mécanique, dans laquelle la variable mécanique est une force mécanique générée par un cylindre hydraulique qui peut subir une pression (p) avec un fluide hydraulique.

13. Système selon l'une des revendications 10 ou 11,
**caractérisé en ce que,**
la grandeur de sortie mesurable est la pression (p) de l'huile hydraulique.

14. Système selon l'une des revendications 12 ou 13,
**caractérisé en ce que,**
le système hydraulique comprend un composant capable de générer un débit volumique (Q) du fluide hydraulique qui provoque un changement de pression (ṗ) dans le système hydraulique.

15. Système selon la revendication 14,
**caractérisé en ce que,**
le composant, par l'intermédiaire duquel un débit volumétrique (Q) peut être généré, est une vanne, dans lequel le système hydraulique peut être relié par l'intermédiaire de la vanne à un réseau à pression constante et le débit volumétrique (Q) entre le réseau à pression constante et le système hydraulique peut être commandé par la vanne.

16. Système selon la revendication 14,
**caractérisé en ce que,**
le composant, par l'intermédiaire duquel un débit volumétrique (Q) peut être généré, est une pompe constante entraînée par un moteur, dans laquelle le débit volumétrique (Q_{P}) est réglé en modifiant la vitesse du moteur (n).

17. Système selon la revendication 14,
**caractérisé en ce que,**
le composant, par l'intermédiaire duquel un débit volumétrique (Q) peut être généré, est une pompe à cylindrée variable entraînée par un moteur, dans laquelle le débit volumétrique (Q_{P}) est réglé en modifiant le volume de débit par tour et/ou en changeant la vitesse du moteur (n).

18. Système selon l'une des revendications 14 à 17,
**caractérisé en ce que,**
un circuit électronique est disposé sur le composant générant le débit volumétrique (Q) avec lequel un procédé selon l'une des revendications 1 à 13 peut être exécuté.
